# EUROPEAN PATENT APPLICATION

(11) **EP 3 306 523 A1**
(43) Date of publication of application: **11.04.2018**
(21) Application number: 16465544.1
(22) Date of filing: 06.10.2016
(51) Int. Cl.: G06K 9/00

(54) **DEVICE FOR DETERMINING A GLARE SITUATION CAUSED BY A TRANSPARENT SCREEN OF A VEHICLE**

(71) Applicant: Continental Automotive GmbH, 30165 Hannover (DE)
(72) Inventor: Stanciu, Ion Rares, 307395 Sag (RO)
(74) Representative: Reuter, Andreas

(57) **Abstract**

The present invention relates to a device (10) for determining a glare situation caused by a transparent screen of a vehicle. It is described to provide (210) a processing unit (30) with at least one image, the at least one image relating to a scene external to a vehicle viewed through a transparent screen of the vehicle. The processing unit determines (220) that a glare situation exists, comprising determining at least one measure of brightness within the at least one image. An output unit (40) outputs (230) information indicating that a glare situation exists.

## Description

### FIELD OF THE INVENTION

The present invention relates to a device for determining a glare situation caused by a transparent screen of a vehicle, to a system for determining a glare situation caused by a transparent screen of a vehicle, to a method for determining a glare situation caused by a transparent screen of a vehicle, as well as to a computer program element.

### BACKGROUND OF THE INVENTION

The general background of this invention is the field of driving warning and information provision systems.

Sun glare is caused when sunlight hits micro flaws in the windscreen of a vehicle, leading to the appearance of a bright halo or cloud in imagery acquired by a camera viewing a scene through the windscreen and can also lead to light ray streaks appearing in acquired imagery.

There is a need to address such sun glare.

### SUMMARY OF THE INVENTION

It would be advantageous to have improved apparatus for determining a glare situation.

The object of the present invention is solved with the subject matter of the independent claims, wherein further embodiments are incorporated in the dependent claims. It should be noted that the following described aspects and examples of the invention apply also for the device for determining a glare situation caused by a transparent screen of a vehicle, the system for determining a glare situation caused by a transparent screen of a vehicle, the method for determining a glare situation caused by a transparent screen of a vehicle, and for the computer program element.

According to a first aspect, there is provided a device for determining a glare situation caused by a transparent screen of a vehicle, comprising:
- an input unit;
- a processing unit; and
- an output unit.

The input unit is configured to provide the processing unit with at least one image, the at least one image relating to a scene external to a vehicle viewed through a transparent screen of the vehicle. The processing unit is configured to determine that a glare situation exists, comprising determination of at least one measure of brightness within the at least one image. The output unit is configured to output information indicating that the glare situation exists.

In other words, a glare situation can be detected on the basis of a measure of brightness in an image acquired through a windscreen of a vehicle or by a camera viewing an outside scene, but not through the windscreen. Thus normal car cameras, which generally focus at infinity, can be utilised in order to detect that a glare situation exists, on the basis of a determined measure of brightness in acquired imagery, where images coming from the camera are being used.

In this manner, having determined that a glare situation exists other car systems can be notified accordingly. Thus, camera glare that can be misinterpreted as condensation within a camera that would lead to an in-camera heater being turned on, is correctly determined to as camera glare and the in-camera heater not activated. Also, stereo camera systems that are used to determine distances to objects in the viewed scene can be informed that there is a glare situation, and distance calculations can either be stopped or qualified accordingly. Furthermore, analysis systems that are detecting and identifying objects in the area outside the car, from for example radar and camera imagery, such as people at the sides of the road, other cars, and stationary objects, can be informed that a camera glare situation exists and as such acquired imagery may be compromised. In this way, the importance of the camera acquired imagery can be reduced in comparison to the radar acquired imagery, and/or the importance of imagery acquired from a camera that is not suffering from a glare situation can be raised in importance in comparison to imagery acquired from a camera that is suffering from a glare situation.

Thus, the device detects and signalizes (to other algorithms) that a (sun) glare situation is occurring. For example, a stereovision system that is using imagery from two cameras to determine distances to objects can be compromised due to sun glare as different apparitions appear in the images and thus the imagery cannot be paired. The stereovision system is however informed that a glare situation has occurred, and as such can act accordingly and if necessary stop the pairing of images until the glare situation has passed.

To put this another way, the device detects and signalizes that a camera is suffering from a glare situation from acquired imagery, enabling in car systems to take appropriate action.

In an example, the at least one image was acquired by at least one camera of the vehicle.

Thus in this manner, standard vehicle cameras that are viewing scenes external to the vehicle as part of navigation and/or safety systems, or as part of automatic driving systems can also be utilised to determine if a glare situation exists that could be compromising imagery acquired by a camera suffering from the glare situation.

In an example, determination of the at least one measure of brightness comprises an intensity based determination that an intensity level of at least one region of the at least one image exceeds a threshold value.

In this way, a glare situation leading to a halo or cloud of brightness covering an area of an image can be determined.

In an example, determination of the at least one measure of brightness comprises a determination that intensity levels in each of a plurality of adjacent regions of the at least one image exceeds the threshold value.

In this way, the intensity levels, above a threshold, can be used to determine if a glare situation exists and quantify the severity of that glare situation in terms of how far above the threshold the intensity level(s) is or are.

In an example, the at least one measure of brightness comprises the number of adjacent regions having an intensity level above the threshold value.

In this manner, the number of regions exceeding an intensity based threshold can be used to determine a confidence level that a glare situation exists.

In an example, determination of the at least one measure of brightness comprises an edge based determination that a number of bright to dark transitions of at least one region of the at least one image exceeds or is below a threshold value.

In this way, a glare situation leading to a halo or cloud of covering an area of an image can be determined on the basis of a number of blurry edges occurring in an image region or on the basis of sharp spatial features being washed out within the halo or cloud region.

In an example, determination of the at least one measure of brightness comprises a determination that a number of bright to dark transitions in each of a plurality of adjacent regions of the at least one image exceeds or is below the threshold value.

In this manner, the number of "edges" or bright to dark transitions, above a threshold, can be used to determine if a glare situation exists and quantify the severity of that glare situation in terms of how far above the threshold the number(s) of edges is or are.

In an example, the at least one measure of brightness comprises the number of adjacent regions having a number of bright to dark transitions above or below the threshold value.

In this manner, the number of regions exceeding an edge based threshold can be used to determine a confidence level that a glare situation exists.

In an example, determination of the at least one measure of brightness comprises a determination that a first region of the at least one image has an intensity level above a threshold value and a determination that a second region of the at least one image has an intensity level above the threshold. The determination of the at least one measure of brightness also comprises a determination of a first angle between a first line joining a position of the first region and a position of the second region and a line defining a horizontal axis.

In this manner, a glare situation can be determined that leads to an intense stripe occurring across the image over known angles for such glare induced stripes.

In an example, determination of the at least one measure of brightness comprises a determination that a third region of the at least one image has an intensity level above the threshold, and a determination that a second angle between a second line joining the position of the first region and a position of the third region and the line defining the horizontal axis is substantially the same as the first angle or a determination that a third angle between a third line joining the position of the second region and the position of the third region and the line defining the horizontal axis is substantially the same as the first angle.

In this way, a glare situation that leads to an intense stripe occurring across an image can be determined with greater confidence, because the intense stripe is continuous across the image.

According to a second aspect, there is provided a system for determining a glare situation caused by a transparent screen of a vehicle, comprising:
- at least one camera; and
- a device for determining a glare situation caused by a transparent screen of a vehicle according to the first aspect.

The at least one camera is configured to be located on or within a vehicle. The at least one camera is also configured to acquire the at least one image relating to a scene external to the vehicle viewed through the transparent screen of the vehicle.

In this manner, a camera based system is provided for a car, that can make use of existing cameras or use bespoke cameras that are looking at scenes outside of the car with the cameras focussed on infinity, and the system enables the detection of a glare situation that could be compromising acquired camera imagery.

According to a third aspect, there is provided a method for determining a glare situation caused by a transparent screen of a vehicle, comprising:
a) providing a processing unit with at least one image, the at least one image relating to a scene external to a vehicle viewed through a transparent screen of the vehicle;
b) determining with the processing unit that a glare situation exists, comprising determining at least one measure of brightness within the at least one image; and
c) outputting with an output unit output information indicating that a glare situation exists.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for determining a glare situation caused by a transparent screen of a vehicle;
Fig. 2 shows a schematic set up of an example of a system for determining a glare situation caused by a transparent screen of a vehicle;
Fig. 3 shows a method for determining a glare situation caused by a transparent screen of a vehicle;
Fig. 4 shows images of sun glare including a light ray appearing in acquired imagery;
Fig. 5 shows images of sun glare including a halo or cloud appearing in acquired imagery;
Fig. 6 shows images of glare from light reflected from a road surface and from lighting in a tunnel, including a halo or cloud appearing in acquired imagery and light rays appearing in acquired imagery;
Fig. 7 shows schematic representations of glare in acquired imagery as shown in Figs 4-6;
Fig. 8 shows an example of a heuristic used in glare detection;
Fig. 9 shows a tile map used in glare detection;
Fig. 10 shows a an example of a hysteresis used as part of decision making in glare detection;
Fig. 11 shows a schematic example of image processing used in glare detection;
Fig. 12 shows a tile map used in glare detection; and
Fig. 13 shows examples of edges of interest that can be analysed in order to determine a glare situation.

### DETAILED DESCRIPTION OF EMBODIMENTS

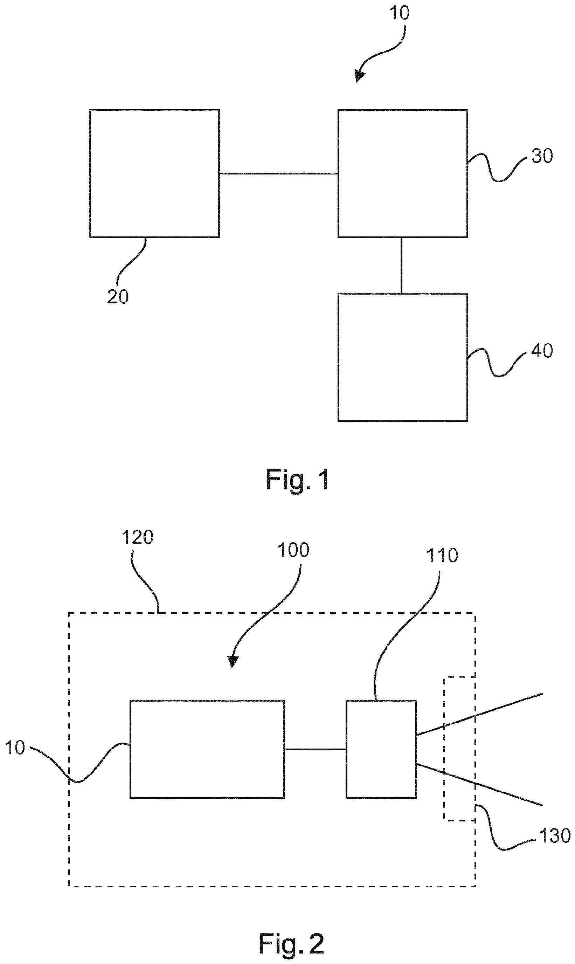

Fig. 1 shows an example of a device 10 for determining a glare situation caused by a transparent screen of a vehicle. The device 10 comprises an input unit 20, a processing unit 30, and an output unit 40. The input unit 20 is configured to provide the processing unit 30 with at least one image, this is done via wired or wireless communication. The at least one image relates to a scene external to a vehicle viewed through a transparent screen of the vehicle. The processing unit 30 is configured to determine that a glare situation exists, comprising determination of at least one measure of brightness within the at least one image. The output unit 40 is configured to output information indicating that the glare situation exists.

In an example, the transparent screen is the windscreen of the vehicle. In other words, a camera within the vehicle can be imaging the scene outside of the vehicle through the windscreen of the vehicle. In an example, the transparent screen is a protective screen that forms part of the camera itself. Thus, a camera can be mounted outside of the cabin of the vehicle and be imaging the scene outside of the vehicle without imaging that scene through a windscreen of the vehicle.

According to an example, the at least one image was acquired by at least one camera of the vehicle.

According to an example, determination of the at least one measure of brightness comprises an intensity based determination that an intensity level of at least one region of the at least one image exceeds a threshold value.

According to an example, determination of the at least one measure of brightness comprises a determination that intensity levels in each of a plurality of adjacent regions of the at least one image exceeds the threshold value.

According to an example, the at least one measure of brightness comprises the number of adjacent regions having an intensity level above the threshold value.

In an example, determination of the at least one measure of brightness comprises an edge based determination that at least one region of the at least one image exceeds or is below a threshold value.

According to an example, determination of the at least one measure of brightness comprises an edge based determination that a number of bright to dark transitions of at least one region of the at least one image exceeds or is below a threshold value.

In an example, an edge based determination comprises a is a "blurry" edge characteristic of features that have had spatial features washed out due to a glare situation. In other words, the processing unit is configured to determine a glare situation when the number of blurry edges in a region exceeds a threshold.

In an example, an edge based determination comprises a "normal" edge characteristic of features in an image that have not had features washed out due to a glare situation. Thus, when a glare situation effects a part of an image the number of normal or sharp edges will decrease, and the processing unit is configured to determine a glare situation when the number of such normal edges is below a threshold.

In an example, the edge based determination comprises utilisation of a Haar wavelet transform. In an example, the Haar wavelet transform is utilised to detect blurry pixel blocks in an image. In an example, the edge based determination comprises a determination of a measure of local gradients and/or a measure of the sharpness of features in different spatial areas of the image. In an example, the edge based determination comprises utilisation of an edge detection algorithm. In an example, the edge based determination comprises utilisation of a point spread function applied over different spatial areas of the image. In an example, the edge based determination comprises utilisation of a Fourier transform or Fast Fourier transform applied over different spatial areas of the image. In an example, the edge based determination comprises utilisation of a Gaussian Laplace filter over different spatial areas of the image. In other words, as the image has been acquired by a camera that is not focussed on the windscreen but is configured to view the scene outside of the vehicle, the outside scene will be characterised by features that are in focus and as such have sharp edges, strong gradients etc. However, a region of the image where scattering of light in the windscreen and/or protective transparent screen over a camera leads to a glare situation a region of the image will have features that are washed out, and will be characterised by edges that are not as sharp as to be found in other image areas and gradients that are not as strong as in other image areas. The processing unit then uses image processing algorithms to analyses areas of the image, at an appropriate spatial scale, to determine if that area is suffering from a glare situation or not. This determination can be self contained, in that the determination can be made on the basis of the analysis of that region, or the determination can be made taking into account the analysis in other image areas.

In an example, determination of the at least one measure of brightness comprises a determination that a number of edges in each of a plurality of adjacent regions of the at least one image exceeds or is below the threshold value.

In an example, the at least one measure of brightness comprises the number of adjacent regions having a number of edges above or below the threshold value.

According to an example, determination of the at least one measure of brightness comprises a determination that a number of bright to dark transitions in each of a plurality of adjacent regions of the at least one image exceeds or is below the threshold value.

According to an example, the at least one measure of brightness comprises the number of adjacent regions having a number of bright to dark transitions above or below the threshold value.

According to an example, determination of the at least one measure of brightness comprises a determination that a first region of the at least one image has an intensity level above a threshold value and a determination that a second region of the at least one image has an intensity level above the threshold. The determination of the at least one measure of brightness then comprises a determination of a first angle between a first line joining a position of the first region and a position of the second region and a line defining a horizontal axis.

In an example, the first angle is of the order of 82-83 degrees or is of the order of 120 degrees.

According to an example, determination of the at least one measure of brightness comprises a determination that a third region of the at least one image has an intensity level above the threshold. The determination of the at least one measure of brightness then comprises a determination that a second angle between a second line joining the position of the first region and a position of the third region and the line defining the horizontal axis is substantially the same as the first angle. The determination of the at least one measure of brightness can also or alternatively comprise a determination that a third angle between a third line joining the position of the second region and the position of the third region and the line defining the horizontal axis is substantially the same as the first angle.

In an example, the determination comprises the second line substantially being a continuation of the first line, or the third line substantially being a continuation of the first line.

In an example, determination of the at least one measure of brightness comprises utilisation of a hysteresis process.

In an example, the bright to dark and dark to bright transitions are recorded within regions in imagery to determine if there is glare situation. Since glass such as a windshield has microflaws light hitting these reflect depending on its angle. Light angle changes cause light and dark regions within an overall region that is blurry. In an example, for a 16x16 pixel block of pixels being examined the number of brightness transitions is recorded. In an example, a degree of confidence is calculated by determining a block that has the largest number of light/dark (or blur) transitions. A threshold level is set at half of this maximum number. The number of blurry blocks with transitions below this threshold, but non zero, is divided by a number of blocks with transitions to compute a degree of confidence, which can be expressed as a percentage.

Fig. 2 shows a system 100 for determining a glare situation caused by a transparent screen of a vehicle. The system 100 comprises at least one camera 110, and a device 10 for determining a glare situation caused by a transparent screen 130 of a vehicle as described with respect to Fig. 1. The at least one camera 110 is configured to be located on or within a vehicle 120. The at least one camera 110 is configured to acquire the at least one image relating to a scene external to the vehicle viewed through the transparent screen of the vehicle.

In an example, the at least one camera 110 is the input unit 20.

In an example, the at least one camera is located within the vehicle and the transparent screen is the windscreen of the vehicle.

In an example, the device is located within the vehicle. However, image data could be sent from the camera to a device that is external to the vehicle, such as in a centralised vehicle depot, and imagery processed there can be used to indicate if a glare situation is potentially compromising acquired imagery.

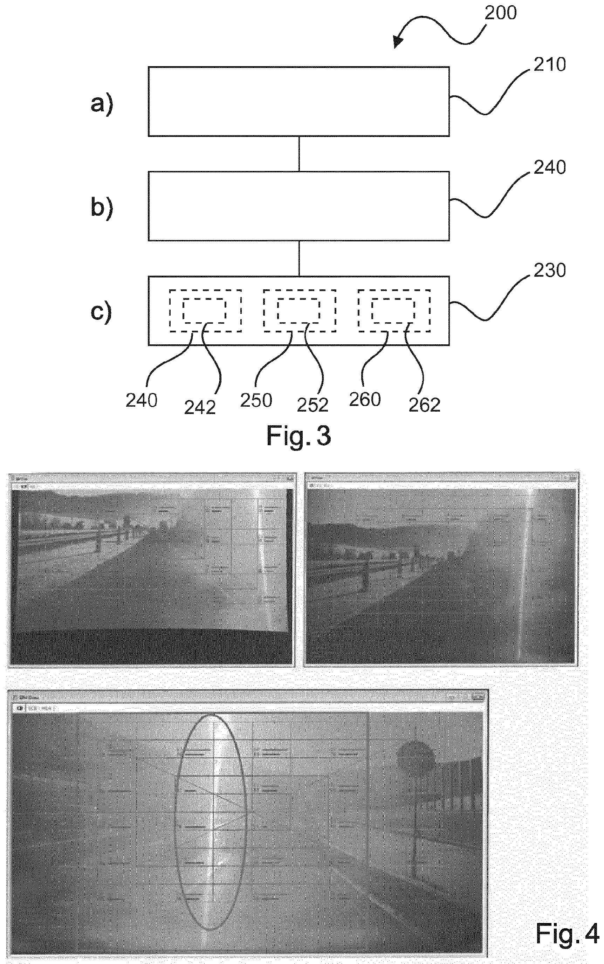

Fig. 3 shows a method 200 for determining a glare situation caused by a transparent screen of a vehicle in its basic steps. The method 200 comprises:
in a providing step 210, also referred to as step a), providing a processing unit 30 with at least one image, the at least one image relating to a scene external to a vehicle viewed through a transparent screen of the vehicle;
in a determining step 220, also referred to as step b), determining with the processing unit that a glare situation exists, comprising determining at least one measure of brightness within the at least one image; and
in an outputting step 230, also referred to as step c), outputting with an output unit 40 output information indicating that a glare situation exists.

In an example, step b) comprises step b1) determining 240 that an intensity level of at least one region of the at least one image exceeds a threshold value.

In an example, step b1) comprises step b1a) determining 242 that intensity levels in each of a plurality of adjacent regions of the at least one image exceeds the threshold value.

In an example, following step b1a), the at least one measure of brightness comprises the number of adjacent regions having an intensity level above the threshold value.

In an example, step b) comprises step b2) determining 250 that a number of bright to dark transitions of at least one region of the at least one image exceeds or is below a threshold value.

In an example, step b2) comprises step b2a) determining 252 that a number of bright to dark transitions in each of a plurality of adjacent regions of the at least one image exceeds or is below the threshold value.

In an example, following step b2a), the at least one measure of brightness comprises the number of adjacent regions having a number of bright to dark transitions above or below the threshold value.

In an example, step b) comprises step b3) determining 260 that a first region of the at least one image has an intensity level above a threshold value and determining that a second region of the at least one image has an intensity level above the threshold, and determining a first angle between a first line joining a position of the first region and a position of the second region and a line defining a horizontal axis.

In an example, step b3) comprises step b3a) determining 262 that a third region of the at least one image has an intensity level above the threshold, and determining that a second angle between a second line joining the position of the first region and a position of the third region and the line defining the horizontal axis is substantially the same as the first angle or determining that a third angle between a third line joining the position of the second region and the position of the third region and the line defining the horizontal axis is substantially the same as the first angle.

In an example, step b3a) comprises determining that the second line is substantially a continuation of the first line, or the third line is substantially a continuation of the first line.

The device, system and method are now described in further detail with respect to Figs. 4-13.

Fig. 4 shows in the top two frames images acquired by the left and right cameras of a stereovision system. The two images are paired in order that distances to objects in the imaged scene can be determined. However, sunlight scattering at micro flaws in the windscreen has led to sun glare in the acquired imagery. Two types of sun glare are present. A first type is termed heavy glaring, and is observed as a light ray that bisects the image. The light ray can be at an angle of 82-83 degrees or 120 degrees. A second type is termed soft glaring, and is observed as a halo area or cloud in the acquired imagery. The right and left images are affected in the same way regardless of the light direction. Soft glaring and/or heavy glaring can be present in imagery due to sunlight interacting with the windscreen, and in the case of a stereovision system can mean that the 2 images cannot be correctly paired, leading to the incorrect determination of distances. Sun glare, in terms of both heavy glaring and soft glaring can also affect individual images as shown in the bottom frame of Fig. 4, where imagery of a car in front of the vehicle is severely compromised due to the sun glare. It can then be difficult, if not impossible, to determine the car-type that is in front of the vehicle. Additionally, systems that are determining the edge of the road or road signs, traffic sign recognition etc, determining that a person is standing at the edge of the road, are compromised due to such sun glare, which can be especially problematic in the summertime. Also, sun glare can be misinterpreted by camera systems as condensation within a camera, leading to the turning on of a camera heater that is not required. Heavy and soft glaring can also affect the transparent covering of a camera itself, and can thus affect a camera that is mounted external to a vehicle and that is not viewing a scene through the windscreen.

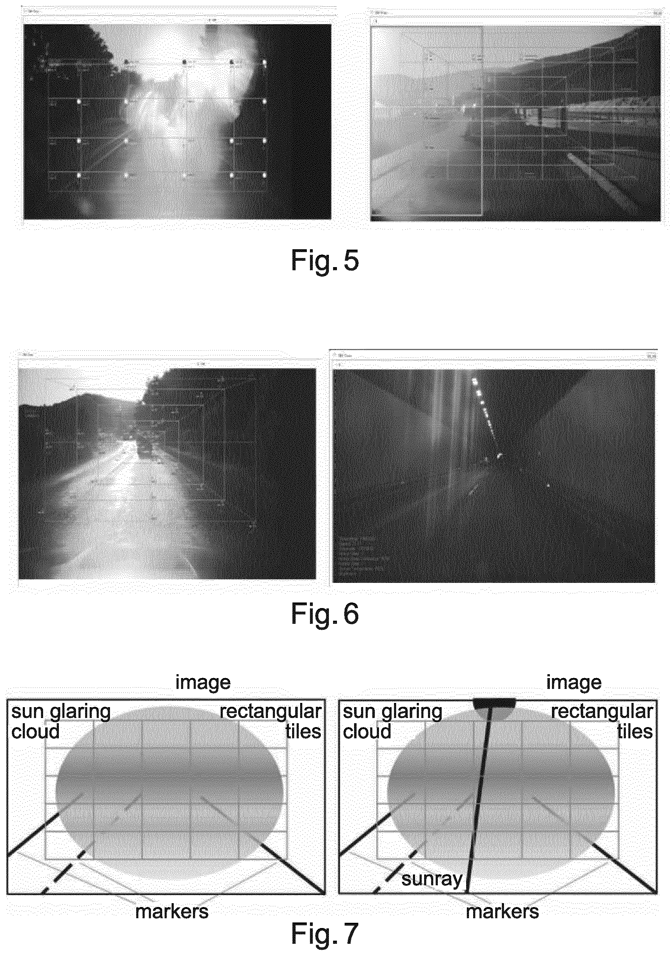

Fig. 5 shows examples of soft glaring, and Fig. 6 shows examples of soft and heavy glaring caused by indirect sunlight or by other light sources. In the left-hand frame of Fig. 6 soft glaring is caused due to sunlight reflecting off a wet (or icy) road surface and in the right-hand frame of Fig. 6 soft and heavy glaring is caused due to the lighting in a tunnel.

Fig. 7 schematically shows soft glaring in the left-hand frame, and soft and heavy glaring in the right-hand frame, as representations of the imagery shown in fig 4-6.

The device, system and method for determining a glare situation caused by a transparent screen vehicle here described enables determination to be made that a glare situation has occurred. Systems that are using such imagery can then be warned or notified that such imagery is potentially compromised due to glare, and those systems can then take appropriate action.

Different glare situation detections are now described with reference to Figs 4-13, where as discussed above (sun) glare affects acquired imagery and the performance of system algorithms that use such imagery can become compromised or affected. A number of "modules" are used to detect sun glare situations (brightness, blurry edge, saturated pixels, and sunray), from which algorithms that used acquired imagery can be appropriately notified. The detection of sun glare in different situations, using these different "modules" is now discussed in more detail. These different sun glare situations can occur independently of one another, but also can occur together (heavy sun glaring, soft sun glaring, and lane sun glaring), and these glare situations are detected based on images taken from a car's camera.

### Region of Interest (ROI) / Grids

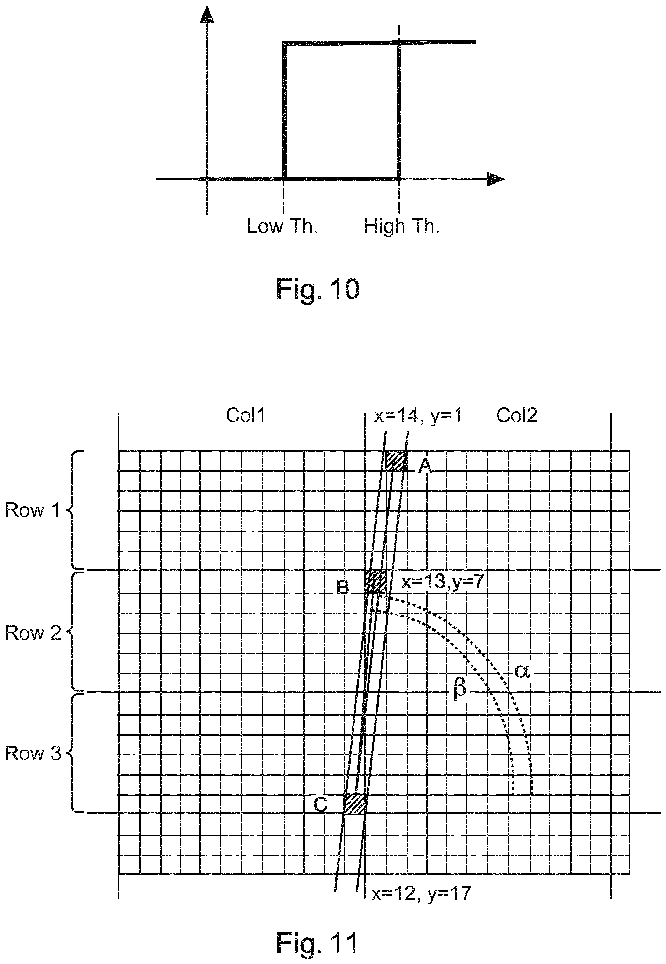

To facilitate image processing, and reduce the amount of computation required for image processing, a tile concept is being used. As such a Region Of Interest (ROI) is defined in the image. This region is composed of 5x5=25 squared tiles (also known as Area Of Interest - AOI). This 5x5 grid of tiles is shown in Figs 4 and 5, 7 and 9. Each of the 25 tiles is itself associated with a number of blocks of 16x16 pixels. These blocks are shown in Fig 11, where a tile is shown with 12 columns of blocks and 6 rows of blocks (in other examples there are 12 rows of blocks to a tile). Thus in this example one tile has 6 x 12 blocks, with each block having 16 x 16 pixels. Thus a tile is 192 pixels in width and 96 pixels high in this example. Other number of tiles and other numbers of pixels in a block can be utilized as required.

This ROI is centered in the image. To accomplish this, the horizon line and the vanishing point are taken into consideration. The result of image analysis returns the number of edges detected in each tile. Other features (for example the tile's brightness or blur) are also computed during the image processing. The values computed in the image processing are the input data for the sun glaring detector.

### The sun glaring algorithm - The Soft Glaring Detector

Computed values of brightness are integrated in time (in order to remove the spikes generated by sun shining through the trees, black-white camera balancing, etc.), however the brightness values change quickly in time. The blur values, however, have a slower time response. The sun glaring detector combines these in a weighted sum in order to detect the sun glaring. If a sunray exists on the image, this is detected by the Heavy Glaring (HG) module discussed below.

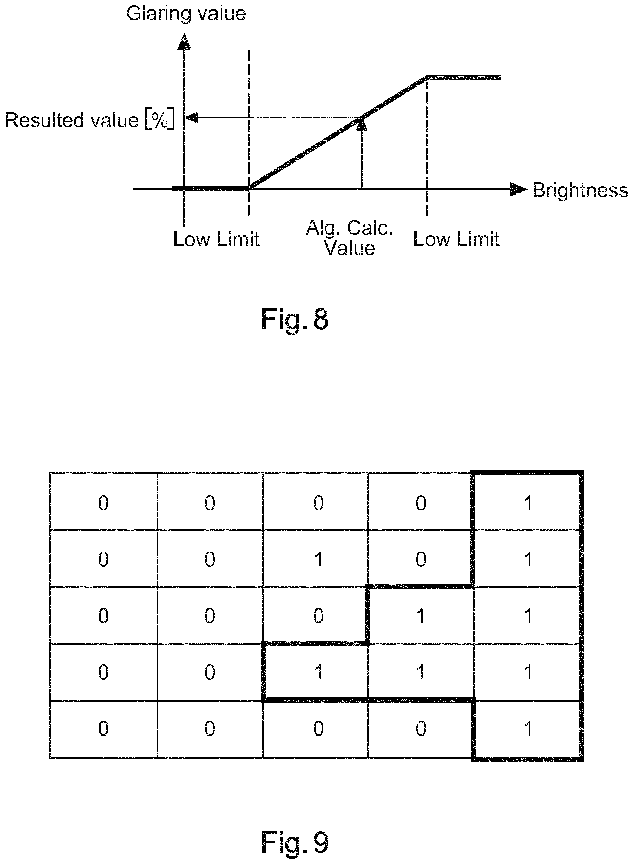

Regarding soft glare detection using brightness, the top row of the 25 block ROI is searched for the tile holding the maximum brightness. This value is compared against a threshold. Also brightness values for tiles located beneath the top row (the first, second and third row beneath) are compared against thresholds. If all values exceed these thresholds the brightness value is placed on a heuristic in order to be able to compute the sun glaring brightness value. The heuristic can be seen in Fig. 8. The heuristics is the way a value detected / computed in the code gets a correspondent in a normalized interval or confidence (for example a percentage). The brightness computed value (denoted in the figure as "Alg. Calc Value") uses this plot to determine the result of the detector. If the computed value is lower than the low limit, the result is zero. If it is higher than the high limit, the result is 100%. If it is in between the limits, the result is computed using the line equation.

Regarding soft glare detection using blurry edge detection, as discussed above the number of blurry edges per tile is determined. Tiles having a number of blurry edges above a threshold have been give the value "one", and the others the value "zero". The resultant map is shown in Fig. 9. The tiles having adjacent neighbours above the threshold (denoted by 1) are grouped in a cloud. This is represented by the solid line containing a number of tiles in the ROI shown in Fig. 9. The number of tiles in the cloud is multiplied by 4 in order to determine the percentage. A heuristic similar to that shown in Fig. 8 is used to convert the number of tiles that are above the threshold value into a confidence.

The brightness values and confidence can be used to determine a soft glare situation, and similarly the blurry edge values and confidence can be used to determine a soft glare situation. However, the brightness and blurry edge analysis can be used together to provide for soft glaring detection. The value and confidence resulting from both the brightness and blur are introduced into a constant weighted sum. This results in one value and one confidence for the soft glaring detector. In order to eliminate the effect of noise, a hysteresis as shown in Fig. 10 is used to determine that there is a glare situation or not. Regarding hysteresis shown in Fig. 10 if the value is low and rising above the high threshold, detectable reporter soft glaring situation. If the value decreases below the low threshold the detector will no longer report that there is a soft glaring situation.

Thus, the image brightness is used together with a heuristic to convert it into a percentage value. The confidence of this value is computed using the image's non edge information. The adjacent tiles holding blurry edges information which exceeds a threshold value are grouped into a cloud and the number of cloud tiles is transformed into a percentage. A confidence is also computed based on the number tiles in the cloud and a heuristic. A weighted sum is used to compute a value and a confidence based on the values computed above. The value is compared against a hysteresis in order to declare glaring.

### The sun glaring algorithm - The Heavy Glaring Detector

With reference to Fig. 11, imagery from the detector is used to signalize glare situations as shown in Fig. 4, where "heavy glare" occurs with a light ray or streak appearing at an angle to the horizontal that can bisect an image. The following workflow is undertaken:
1. In order to detect these situations, the brightest 16x16 pixels block on the upper three rows of tiles in an image is searched (See Fig. 11). The brightness (intensity value) is subjected to thresh-holding.
2. The position of the brightest pixel blocks is also checked (or determined). Considering the sunray in Fig. 4 (regarding a stereovision system the sun glaring algorithm uses the right-hand camera images - the image in the top right frame. However, the left-hand camera image can be used and sunray detection and signalization can be undertaken for imagery acquired by just one camera) the abscissa of the brightest block located on the top row (denoted by A in Fig. 11) has to be bigger than the abscissa of the brightest block from the second row (denoted by B in Fig. 11). The abscissa of the brightest block located on the second row also has to be greater than the abscissa of the brightest block located on the third row (denoted by C in Fig. 11). This is because in the right hand camera imagery in this situation the sunray appears at an angle of 82-83 degrees to the horizontal angled in a left to right manner going from the bottom of the image to the top. Similarly, if the left hand image was analysed the requirement discussed above would be reversed, because the sunray is angled in the opposite direction. Thus the algorithm can be used to detect a sunray as required, whether it is angled to the right or to the left.
3. The co-linearity of the two line segments is then checked, thereby ensuring that a sunray that continuously streaks across an image is being detected.
4. The angle formed by the segment AC with the horizontal is then compared against the angle formed by the segment BC with the horizontal. If the two values are close together points A, B, and C, the fourth condition with the third condition confirms that the points are considered to be collinear, and that the bright points are located on a sunray.
5. The value of the two angles is then determined. If the two angles are close to 83 degrees (the value shown in Fig. 11) the fifth condition is true (or satisfied). The required angle could be near 120 degrees.

If all the above conditions are true (or satisfied), a counter is incremented. If a single condition fails, the counter is decremented. The counter value is compared against a hysteresis (similar to that shown in Fig. 10) in order to make a Heavy Sun Glaring (HSG) decision.

Thus a HSG scenario includes a sunray splitting the image. It can occur with the surrounding "cloud" (Fig. 7 - right frame) or without the cloud. 16x16 pixel blocks holding maximum brightness are detected on the upper three rows of squared tiles. Their coordinates, their co-linearity, and the angle formed with the horizontal are checked (determined). A counter is incremented every time all the conditions are met and decremented otherwise. If the counter value exceeds a hysteresis high threshold, a heavy sun-glaring is declared.

### The sun glaring algorithm - The Lane (Sun) Glaring Detector

As shown in the left hand frame of Fig. 6, glare can occur from light reflecting off the road surface due to it being wet or icy, for example. This is termed "lane glare", and the above described sun glare detection algorithm operates as discussed below in order to detect glare in this situation.

Cases in which the lane (or road) appears wet or icy scenarios in which Lane Sun Glaring can occur, and the sun glaring algorithm in this case deals with the situations in which the Lane is bright and one cannot tell if it is wet or covered with ice, but where glare occurs as shown in Fig. 6.

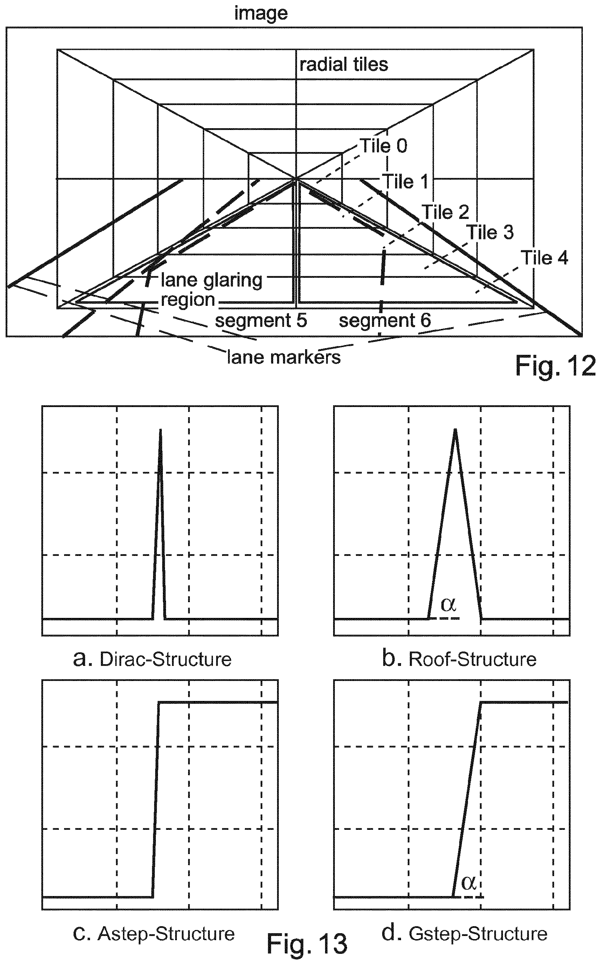

Referring to Fig. 12, to detect Lane sun glaring the detector imagery is divided into radial tiles rather than the block of tiles. This is because the radial tiles, as shown in Fig. 12, have a better road alignment in comparison to blocks of square tiles. The radial tiles are then used to detect the Lane glaring.

The Lane Detection algorithm uses the tiles located in the segments 5 and 6 (the bottom part of the image underneath the horizon line as shown in Fig. 12, with segment 5 being the left-hand bottom triangular section that has the top of the triangle located at the centre of the image, that is directly above the wording "segment 5" and which has parts of tiles 0, 1,2, 3, and 4. Similarly, segment 6 is the oppositely facing triangle at the bottom of the image). The algorithm compares the difference in brightness between the tiles 1 and 2 in segment 5 (tile 0 is not used for this purpose). The difference is subjected to thresh-holding. If lower than a threshold, an average between the two brightness values is computed, otherwise the greater value is retained (the car in far-front may shadow one of the tiles). The obtained value is referred to as the "global" value. A global value is also computed for tiles 1 and 2 in the segment 6.

Thus two values computed above are used to compute a global value for tiles 1 and 2 of segments 5 and 6. A global value is also computed for tiles 3 and 4 in the same manner. The two global values are subjected to thresh-holding. If at least one of them exceeds the threshold, a lane glaring is reported, where use is made of a hysteresis process as discussed above. A confidence value is computed considering all the tiles in segments 5 and 6 for which the brightness exceeds a threshold. The number of them is multiplied by 10 in order to establish a percentage.

In other words, to detect Lane glare whilst avoiding problems caused by shadowing from cars in front, the algorithm selects the brightest value in segments 5 and 6 (as shown in Fig. 12). If the brightness value exceeds a hysteresis high threshold a lane glaring situation is declared. If the brightness value drops below a hysteresis low threshold, the Lane glaring situation is cleared.

### Image Analysis

A good way to determine if a glare situation is occurring is represented by the edges present in the image. Indeed, cases can occur in which no edges may occur (examples include a dark night and / or a cloudless blue summer sky. Several types of edges are of interest in order to analyze an image's blurriness, from which glare can be determined. These edges are:
the Dirac,
the Roof,
the Astep,
the Gstep

These edges can be seen in Fig. 13.

In case of an abrupt edge, high frequencies are involved. Therefore, a crystal-clear image will have edges of types Dirac and Astep. In case of limited frequencies, they become of types b) and d) - blurry. As such an image edge analysis is used to reveal information regarding the blurriness in an image, from which glare can be determined.

Specifically, a Haar algorithm is used to establish the blurriness of the image. Performing a Haar wavelet transform will result in a pyramid like structure (Fig. 13). The decomposition level in this case is 3. The image is then dividend in NxN windows/tiles, each being a power of 2 (in fact this is the reason why the block's dimensions are 16x16). A block (which is often referred to as a tile) is considered if there is a change (an edge) in horizontal, vertical or diagonal directions. However, for each of them there is a threshold. For a specific block, if the change exceeds the threshold, the said block is considered to be an edge point. Changes exceeding a threshold are considered in all directions in order to compute one value for each image (the original one plus two pyramidal images). Several rules apply once these values are found. For every block labeled an edge point, if the computed value in the original image exceeds the value computed in the level 1 image and the level 1 image exceeds the level 2 image computed value, the block is a Dirac or Astep structure, otherwise it is a GStep or Roof edge. If the first level value is greater than the other two, the block is a Roof edge. The original image value is compared with the threshold for every Gstep or Roof-edge. If lower, the block is likely to be in a blurred image, and this blurriness can be correlated with glare.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining a glare situation caused by a transparent screen of a vehicle, comprising:
- an input unit (20);
- a processing unit (30); and
- an output unit (40);
wherein, the input unit is configured to provide the processing unit with at least one image, the at least one image relating to a scene external to a vehicle viewed through a transparent screen of the vehicle;
wherein, the processing unit is configured to determine that a glare situation exists, comprising determination of at least one measure of brightness within the at least one image; and
wherein, the output unit is configured to output information indicating that the glare situation exists.

2. Device according to claim 1, wherein the at least one image was acquired by at least one camera of the vehicle.

3. Device according to any of claims 1-2, wherein determination of the at least one measure of brightness comprises an intensity based determination that an intensity level of at least one region of the at least one image exceeds a threshold value.

4. Device according to claim 3, wherein determination of the at least one measure of brightness comprises a determination that intensity levels in each of a plurality of adjacent regions of the at least one image exceeds the threshold value.

5. Device according to claim 4, wherein the at least one measure of brightness comprises the number of adjacent regions having an intensity level above the threshold value.

6. Device according to any of claims 1-5, wherein determination of the at least one measure of brightness comprises an edge based determination that a number of bright to dark transitions of at least one region of the at least one image exceeds or is below a threshold value.

7. Device according to claim 6, wherein determination of the at least one measure of brightness comprises a determination that a number of bright to dark transitions in each of a plurality of adjacent regions of the at least one image exceeds or is below the threshold value.

8. Device according to claim 7, wherein the at least one measure of brightness comprises the number of adjacent regions having a number of bright to dark transitions above or below the threshold value.

9. Device according to any of claims 1-8, wherein determination of the at least one measure of brightness comprises a determination that a first region of the at least one image has an intensity level above a threshold value and a determination that a second region of the at least one image has an intensity level above the threshold, and a determination of a first angle between a first line joining a position of the first region and a position of the second region and a line defining a horizontal axis.

10. Device according to claim 9, wherein determination of the at least one measure of brightness comprises a determination that a third region of the at least one image has an intensity level above the threshold, and a determination that a second angle between a second line joining the position of the first region and a position of the third region and the line defining the horizontal axis is substantially the same as the first angle or a determination that a third angle between a third line joining the position of the second region and the position of the third region and the line defining the horizontal axis is substantially the same as the first angle.

11. A system (100) for determining a glare situation caused by a transparent screen of a vehicle, comprising:
- at least one camera (110);
- a device (10) for determining a glare situation caused by a transparent screen (130) of a vehicle according to any of claims 1-10;
wherein, the at least one camera is configured to be located on or within a vehicle (120) and the at least one camera is configured to acquire the at least one image relating to a scene external to the vehicle viewed through the transparent screen of the vehicle.

12. A method (200) for determining a glare situation caused by a transparent screen of a vehicle, comprising:
a) providing (210) a processing unit (30) with at least one image, the at least one image relating to a scene external to a vehicle viewed through a transparent screen of the vehicle;
b) determining (220) with the processing unit that a glare situation exists, comprising determining at least one measure of brightness within the at least one image; and
c) outputting (230) with an output unit (40) output information indicating that a glare situation exists.

13. A computer program element for controlling an apparatus according to any one of claims 1 to 10 and/or a system according to claim 11, which when executed by a processor is configured to carry out the method of claim 12.
